# EUROPÄISCHE PATENTSCHRIFT

(11) **EP 0 956 831 B1**
(45) Veröffentlichungstag und Bekanntmachung des Hinweises auf die Patenterteilung: **16.03.2005**
(21) Anmeldenummer: 99107513.6
(22) Anmeldetag: 15.04.1999
(51) Int. Cl.: A61C 13/097

(54) **Satz künstlicher Backenzähne einer abnehmbaren Zahnprothese**
Set of artificial molars in a denture
Jeu de molaires artificielles d'une prothèse dentaire

(30) Priorität: 15.05.1998 CH 108598
(43) Veröffentlichungstag der Anmeldung: 17.11.1999
(73) Patentinhaber: Bosshart, Max, 8840 Einsiedeln (CH)
(72) Erfinder: Bosshart, Max, 8840 Einsiedeln (CH)
(74) Vertreter: Köver, François

(56) Entgegenhaltungen:
- DE-A- 1 491 070
- DE-C- 19 508 762
- US-A- 3 305 926
- US-A- 4 445 863

## Beschreibung

Die Erfindung betrifft einen Satz künstlicher Backenzähne für eine abnehmbare Zahnprothese, gemäss dem Oberbegriff des Patentanspruchs 1.

In der Zahnmedizin bzw. der Zahntechnik kommen bei Vollprothesen, Hybridprothesen und Teilprothesen für teilweise oder vollständig zahnlose Menschen industriell vorgefertigte Backenzähne zur Anwendung, die im Prothesenkörper aus Kunststoff fest verankert sind und mit der Basis aus Kunststoff einen einheitlichen Körper bilden. Solche Prothesen unterscheiden sich deutlich von Zahnkronen und Zahnbrücken, bei welchen die einzelnen Backenzähne jeweils von Grund auf neu aufgebaut, d.h. im zahntechnischen Labor hergestellt und auf den vorgängig präparierten Zahnstümpfen fest zementiert werden.

Hybridprothesen überdecken vollständig darunter liegende Konstruktionen, die eine Verankerung der Prothesen an Zahnstümpfen und neuerdings an künstlich eingesetzten Zahnwurzeln (Implantaten) mittels druckknopfähnlichen Systemen erlauben. Sie sind grundsätzlich, jedoch mit möglichen Ausnahmen, wie normale abnehmbare Prothesen aufgebaut, bei denen wiederum industriell vorgefertigte Backenzähne in der Basis verankert werden.

Bereits im vorigen Jahrhundert wurden künstliche Backenzähne aus Porzellan gefertigt und in Prothesen eingesetzt, die jedoch keine konsequente, auf ihre Funktion ausgerichtete Form aufwiesen. Ab 1908 wurden von A. Gysi künstliche Backenzähne entwickelt, die streng nach funktionellen Prinzipien konstruiert waren. Als Ergebnis der darauffolgenden Entwicklung bestehen zur Zeit drei verschiedene Konstruktionsarten von künstlichen Backenzähnen mit jeweils klar definierter Funktionsweise, die tatsächlich hergestellt und in der Zahnmedizin bzw. der Zahntechnik immer noch verwendet werden. Die einzelnen Backenzähne sind dabei stets fest im Prothesenkörper verankert, und sie kommen in funktionellen Kontakt mit den Gegenzähnen. Ein jeder Zahn beeinflusst die Lagestablität der gesamten Prothese und der anderen Zähne derselben Prothese, da alle Zähne fest mit dem Prothesenkörper verbunden sind. Somit ist beim Aufbau der Prothese sowohl auf die unter dem Kaudruck entstehende funktionelle Einwirkung jedes einzelnen Backenzahnes wie auch auf die funktionelle Wirkung aller Backenzähne gemeinsam zu achten. Wenn Zahnprothesen gleichzeitig im Oberkiefer und im Unterkiefer herzustellen sind, ist zudem auf die wechselseitige Beeinflussung der funktionellen Einwirkung der einzelnen Backenzahnpaare wie auch aller Backenzähne gemeinsam zu achten.
Bei einer oft als "klassisch" bezeichneten Konstruktion vom Typ 1 (nach A. Gysi, vgl. beispielsweise die Patente CH-109795, CH-199038 und CH-88645) entsprechen die Backenzähne, mit möglichen Abweichungen, der Form menschlicher Backenzähne. Sie weisen aber keine Wurzel auf, sondern nur die Zahnkrone, welche der Teil ist, der beim natürlichen Gebiss aus dem Zahnfleisch ragt und sichtbar ist. Die der Zunge zugewandten oralen/palatinalen Höcker der oberen Backenzähne beissen in eine zentrale Kaugrube (Fossa) der unteren Backenzähne, und/oder ein Höcker steht in Kontakt mit zwei Gegenzähnen, die gemeinsam eine Kaugrube bilden. Die zur Wange stehenden bukkalen Höcker der unteren Backenzähne greifen in die Kaugrube eines oberen Backenzahnes oder in eine durch zwei obere Backenzähne gebildeten Kaugrube, so dass jeweils ein ausgeprägter Kontakt zum äusseren bukkalen Höcker der oberen Backenzähne entsteht. Dieser Eingriff aller Höcker in je eine Kaugrube wird als "klassische Okklusion" bezeichnet.

Bei Bewegungen des Unterkiefers gegenüber dem fest am Schädel angewachsenen Oberkiefer bilden die Höcker der oberen Backenzähne stabilisierende Kontakte in Form von Gleitflächen, sie sind deshalb unerlässlich. Nach A. Gysi sollen möglichst alle Backenzähne der oberen Prothese mit der unteren Prothese in Kontakt stehen, wenn der Patient den Unterkiefer bewegt, weil auf diese Weise keine Kippmomente entstehen, da die Prothesen im gegenseitigen Zahnkontakt immer grossflächig und beidseitig abgestützt sind (bilaterale Balancierung).

Nachteilig ist bei dieser Konstruktion vom Typ 1, dass der funktionelle Kontakt zwischen den äusseren bukkalen Höcker der oberen und der unteren Backenzähne beim Vorhandensein von noch grobem, kaum zerkleinertem Kaugut sehr oft ein Kippen der oberen und/oder der unteren Prothese bewirkt. Zur Abhilfe müssen die Backenzähne so weit in den Zungenraum gestellt werden, dass die äusseren druckbelasteten Höcker zumindest auf der Mitte des tragenden Kieferkammes stehen, was jedoch seinerseits den Zungenraum deutlich einengt. Zwar könnte der Kontakt der äusseren bukkalen Höcker aufgehoben werden, um die Kaukräfte nach innen lingual zu verlagern, jedoch verunmöglichen oder zumindest erschweren die Formgebung und die gegenseitige Stellung der Prämolaren in Abwesenheit von Kaugut den stabilisierenden Gleitkontakt bei seitlichen Bewegungen und zum Teil bei Vorschiebebewegungen des Unterkiefers, wie sie zur bilateralen Balancierung verlangt werden. Da die Backenzähne beim Zerkleinern der Nahrung unter funktionellen Druck kommen, ist Stabilität bei einseitiger Belastung unerlässlich. Anderseits entstehen zwischen den Essenszeiten und in der Nacht während des Schlafes ebenfalls und zum Teil intensive funktionelle Zahnkontakte ohne dazwischenliegendes Kaugut.
Zur Behebung der im vorstehenden erwähnten Nachteile wurden Backenzähne gemäss einer Konstruktion vom Typ 2 (nach A. Gerber, vgl. beispielsweise die Patente CH-405601, US-3305926 und CH-607686) entwickelt, bei denen dennoch die bilaterale Balancierung gesichert bleibt und die Prothesen lagestabil und gleichmässig auf der Unterlage d.h. auf dem jeweiligen Kieferknochen der Kieferkämme aufliegen. Aus Stabilitätsgründen werden zum Kauen dominant die der Zunge zugewandten palatinalen/oralen inneren oberen Höcker des oberen Backenzahnes im funktionellen Eingriff in der unteren zentralen Kaugrube eines Backenzahnes oder in der durch zwei Backenzähne gemeinsam gebildete Kaugrube verwendet, wobei der Höcker im wesentlichen kugelförmig und die entsprechende Kaugrube im wesentlichen hohlkugelförmig ist, so dass bei beliebiger Neigung der Backenzähne eine (mit Bezug auf den aufrecht stehenden Prothesenträger) stets vertikale Kraftlinie erzeugt wird. Die äusseren bukkalen Höcker der oberen Backenzähne weisen hingegen keinen oder nur einen deutlich reduzierten, sehr kleinen und möglichst gegen innen, möglichst nahe der oberen Kaugrube liegenden Kontakt auf. Das Kauzentrum und die Kaukräfte verlagern sich deutlich nach innen oral, zur Mundmitte hin, nicht ausserhalb der oberen und unteren Kieferkämme d.h. nicht ausserhalb der den Kaudruck tragenden, knöchernen Unterlagen, denn Kaukräfte, die ausserhalb der Mitte der oberen und unteren Kieferkämme auftreten, würden ein Kippen der jeweiligen Prothese bewirken. Der Druck nach oben-aussen, gegen den oberen, schräg nach aussen-unten geneigten bukkalen Höcker des oberen Backenzahnes entfällt vollständig oder ist zumindest deutlich vermindert. So wird, gegenüber der Konstruktion vom Typ 1, Zungenraum ohne Verlust an Stabilität unter dem Kaudruck deutlich gewonnen. Das Backenzahnrelief entspricht, allerdings mit zum Teil deutlichen Abweichungen, im wesentlichen dem natürlichen Vorbild.

Da beim normalerweise einseitigen Kauen das anfangs noch grosse und feste Kaugut den Kontakt der Backenzähne verunmöglicht, werden hingegen die äusseren bukkalen Höcker ausser Kontakt gesetzt, was als "lingualisierte Okklusion" bezeichnet wird.

Bei Seitwärtsbewegungen des Unterkiefers in Abwesenheit von Kaugut bleiben alle Backenzähne in ständigem Kontakt miteinander (bilaterale Äquilibrierung), wobei nur die inneren palatinalen Höcker zum Gegenzahn Kontakt halten. Die oberen äusseren Höcker überlappen wohl die unteren äusseren Höcker, jedoch deutlich ohne Kontakt, weil sie die Prothese beim Vorhandensein von Kaugut zum Kippen bringen könnten.

Bei diesen Backenzähnen mit der Konstruktion vom Typ 2 ist nachteilig, dass ihre Kaueffizienz kleiner ist als die Kaueffizienz der Backenzähne mit der Konstruktion vom Typ 1. Die Funktionsweise der kugelförmigen Höcker in den hohlkugelförmigen Fossas führt zu einer vertikalen Ausrichtung der Kraft. Das bedingt, dass der untere Zahn in dieser Kraftlinie stehen muss und deswegen den Zungenraum einengt.

Mischkonstruktionen vom Typ 1 und 2 ergeben sich beispielsweise aus einer Konstruktion nach H.P. Foser, welche die klassische Okklusionsstellung wie bei der Konstruktion vom Typ 1 und die lingualisierte Okklusion wie bei der Konstruktion vom Typ 2 erlaubt, und einer Konstruktion nach H. Schröder (vgl. beispielsweise das Patent CH-161975) für einen Backenzahn, bei dem die Kaumulden oben und die aktiven Höcker unten in die jeweilige Prothese eingebaut sind, wobei diese Form nichtanatomisch, aber auch nicht flach ist wie bei der nachfolgend beschriebenen Konstruktion vom Typ 3.

Bei einer Konstruktion vom Typ 3 ist der Grundgedanke, bei Bewegungen des Unterkiefers mittels einer flachen Kaufläche keinerlei Hindernisse einzubauen. Die Kauflächen der unteren Backenzähne und/oder der oberen Backenzähne entsprechen dabei nicht mehr denen der natürlichen Backenzähne (nichtanatomische Backenzähne), sondern die betreffenden Kauflächen solcher Backenzähne sind flach. Somit können die Backenzähne nicht vollständig auf alle Unterkieferbewegungen abgestimmt und in gegenseitigem (bilateralem) Kontakt gehalten werden. Immer wird, entweder auf der inneren oder auf der äusseren Seite, ein Kontakt verlorengehen.

Bei den anatomisch geformten künstlichen Backenzähnen der Konstruktionen vom Typ 1 und 2 stehen die oralen inneren Höcker der Backenzähne in der dagegenstehenden, antagonistischen Kaugrube in funktionellem Eingriff (Okklusion), wobei der Höcker sowohl im Backenzahn der Oberkieferprothese wie auch im Backenzahn der Unterkieferprothese sein kann und die entsprechende Kaugrube entweder zentrisch im Gegenzahn liegt oder durch zwei nebeneinander stehende Backenzähne gebildet wird. Die Ausbildung der Höcker und der Kaugrube bewirkt bei ihrem gegenseitigen funktionellen Eingriff einen Kraftvektor.

Idealerweise trifft bei zentrischem Funktionskontakt eines jeden Backenzahnpaares (oder auch zwischen drei Backenzähnen) der jeweilige obere und untere Kraftvektor der belasteten Backenzähne (links oder rechts im Munde) auf die Mitte des tragenden Alveolarkamms auf. Der Alveolarkamm, in dem ursprünglich die natürlichen Backenzähne fixiert standen, ist beim Unbezahnten die tragende Auflage der Prothesen. Verläuft die Projektion des Kraftvektors der Prothesenzähne unter Kaulast oben oder unten ausserhalb des tragenden Kieferkammes, so kippt die jeweilige Prothese, wenn Kaudruck entsteht. Das betrifft sowohl einen einzelnen unter Kaudruck stehenden Backenzahn als auch alle unter Last stehende Backenzähne der Prothese.

In der frontalen (transversalen) Ansicht steht im Bereich der Backenzähne der obere Kieferkamm gegenüber dem unteren Kieferkamm in der allergrössten Mehrheit der Fälle seitlich nach innen versetzt, je nach Grad des Schwundes (Atrophie) des Kieferknochens. Um ein Kippen der oberen Prothese zu verhindern, müssen die inneren Höcker oder Kaugruben der oberen Backenzähne idealerweise vertikal unter der Mitte des Kieferkammes stehen. In der Folge stehen, bedingt durch den senkrecht/vertikal verlaufenden Kraftvektor, die unteren Backenzähne mit ihren Funktionszentren (Kaugruben oder Höcker) zum Teil erheblich innerhalb des Kieferkammes. Damit wird in vielen Fällen der Zungenraum der unteren Prothese eingeengt, was den Patienten beim Sprechen und beim Kauen stört. Um mehr Platz für die Zunge zu bekommen, wäre eine Umlenkung des vertikal orientierten Kraftvektors in Richtung des weiter aussen stehenden unteren Kieferkammes von Vorteil. Dies bedeutet eine Orientierung des Kraftvektors entlang der sogenannten "Interalveolären Linie", welche die gedachte Verbindungslinie von der Mitte des Kieferkammes oben zur Mitte des Kieferkammes unten darstellt und etwa 10°-15° von der Vertikalen abweicht. Der jeweilige Backenzahn (in der Regel der untere Backenzahn) liesse sich entsprechend weiter nach aussen bukkal auf den Kieferkamm setzen, ohne die Stabilität der oberen oder unteren Prothesen zu beeiträchtigen.

In der seitlichen (sagittalen) Ansicht stehen die Backenzähne je nach Form des Kieferkammes und Grad des Schwundes des die Prothesen tragenden Kieferknochens über einer schiefen, nach vorn geneigten Ebene, um so mehr als der Kieferkamm naturgemäss nach hinten-oben ansteigt. Der Verlust an Kieferknochen kann dieses Problem erheblich steigern. Unter dem Kaudruck gleitet die Prothese auf dieser schiefen Ebene nach vorne weg. Auch hier erlaubt nur eine veränderte, von der Vertikalen abweichende, nach hinten unten umgelenkte Kraftlinie, die Backenzähne kaustabil zu belasten. Erst wenn der Kraftvektor rechtwinklig oder im spitzen, nach hinten orientierten Winkel auf den unteren Kieferkamm trifft, entsteht kein Ausgleiten der unteren Prothese nach vorne.

Zur optimalen Ausrichtung des Kraftvektors benötigt die Konstruktion vom Typ 1 eine "klassische Okklusion" mit einem Eingriff aller Höcker in je eine Kaugrube, d.h. mit einem Eingriff des der Zunge zugewandten oralen/palatinalen Höckers der oberen Backenzähne in eine entsprechende Kaugrube der unteren Backenzähne und zugleich einem Eingriff des zur Wange stehenden bukkalen Höckers der unteren Backenzähne in eine entsprechende Kaugrube der oberen Backenzähne. Es ist dabei nicht möglich, für einen gegebenen Höcker eines gegebenen Backenzahnes den bei der Kaubelastung entstehenden Kraftvektor sowohl in seitlicher Richtung nach innen/lingual oder aussen/bukkal wie auch in sagittaler Richtung nach hinten/distal oder vorn/mesial einzeln oder beides kombiniert und jedenfalls unabhängig von anderen Höckern dieses Backenzahnes bzw. der beteiligten Backenzähne in die optimale Richtung zu orientieren, dazu fehlen die nötigen konstruktiven Freiheitsgrade. Das Ausgleiten der unteren Prothese nach vorne kann durch zusätzliche Neigung des Backenzahnes, bis er parallel zum tragenden Kieferkamm steht, teilweise verhindert werden. Dazu werden aber die äusseren bukkalen Höcker benötigt, die in festem Eingriff mit den unteren Höckern stehen, denn nur mit dem inneren Höcker im funktionellen Eingriff in der entsprechenden Kaugrube ist die erreichbare Umlenkung des Kraftvektors ungenügend.

Demgegenüber kann die Konstruktion vom Typ 2 überhaupt nicht zur richtigen Orientierung des Kraftvektors führen, weil der aktive kugelförmige Höcker in der entsprechenden, sphärisch okkludierendenden Kaugrube trotz Neigung der beiden Backenzähne eine stets vertikale Kraftlinie erzeugt. Die äusseren bukkalen Höcker können nicht zur Korrektur der Orientierung des Kraftvektors herangezogen werden, denn sie dürfen nicht in Kontakt kommen, da sie die transversale Statik gefährden.

Aus dem Dokument US 4 445 863 ist ein Satz künstlicher Backenzähne einer abnehmbaren Zahnprothese eines Paares von Zahnprothesen nach dem Oberbegriff von Anspruch 1, bekannt.

Somit ist es Aufgabe der vorliegenden Erfindung, bei Konstruktionen vom Typ 1 oder 2 oder Mischkonstruktionen vom Typ 1 und 2 eine Verbesserung der Konstruktion vorzuschlagen, die eine Umorientierung der Kaukräfte in transversaler und in sagittaler Richtung unter Verwendung nur eines Höckers in seiner entsprechenden Kaugrube erreichen lässt. Sowohl in frontaler wie auch in seitlicher Ansicht soll die kontrollierte Umlenkung der Kraftvektoren kaufunktionell belasteter Backenzähne gewährleistet sein. Die transversale und sagittale Umorientierung der Kraftvektoren soll jedoch ohne funktionellen Einsatz der äusseren bukkalen Höcker erfolgen, sondern einzig mit jedem einzelnen inneren oralen Höcker erreicht werden. Stehen zwei innere orale Höcker im funktionellen Eingriff zum Gegenzahn, so soll die Umlenkung der Kraftvektoren von jedem Höcker einzeln oder von beiden Höckern gemeinsam bewirkt werden können.

Zur Lösung dieser Aufgabe ist ein Satz künstlicher Backenzähne der eingangs genannten Art gekennzeichnet durch die im Patentanspruch 1 definierte Kombination von Merkmalen. Bevorzugte Weiterbildungen der Erfindung sind in den abhängigen Patentansprüchen definiert.

Die in den Ansprüchen definierte Erfindung führt zu einem Gewinn an Zungenraum und an Kaustabilität. Durch absichtlich grossflächig ausgebildete Kontakte zwischen den oberen und unteren in Okklusion stehenden Backenzähnen und durch die gezielte Neigung der in Kontakt stehenden Facetten der oberen und unteren Backenzähne lassen sich die resultierenden Kraftvektoren in transversaler und sagittaler Richtung in die jeweils gewünschte Richtung neigen, und zwar wahlweise nur in transversaler oder nur in sagittaler oder kombiniert in transversaler und in sagittaler Richtung. Dies bezieht sich auf die Projektion der Kraftvektoren in der Ebene sowohl der frontalen (transversalen) Ansicht als auch der seitlichen (sagittalen) Ansicht und wird durch den einzigen Eingriff nur eines Höckers in seine zugehörige Kaumulde erreicht. Stehen mehrere Höcker eines Zahnes im funktionellen Eingriff, so wird die Umlenkung der Kraftvektoren ohne Eingriff der destabilisierenden äusseren bukkalen Höcker von jedem inneren oralen Höcker einzeln oder von beiden inneren oralen Höckern gemeinsam bewirkt. So ist die Kaukraft in der grossen Mehrheit der Fälle besser gegen die prothesentragenden oberen und unteren Kieferkämme orientiert, was zu einer deutlich verbesserten Stabilität der oberen und unteren Prothesen führt. Die äusseren Höcker bleiben dabei bewusst ausser Funktion. Ohne nachteilige Wirkung bleibt zwischen der linken und rechten Backenzahnreihe mehr Raum für die Zunge, und die dynamischen Kaubewegungen werden dabei nicht behindert. In frontaler (transversaler) Ansicht lässt sich ein Kreuzbiss öfters umgehen. In seitlicher (sagittaler) Ansicht wird ein besserer Andruck der unteren Prothese gegen den schrägen Kieferkamm erreicht, und das typische Ausgleiten kaubelasteter Prothesen nach vorn auf der schiefen Unterlage lässt sich (zumindest bis zu einem gewissen Neigungswinkel) verhindern.

Weisen Zähne mehr als einen aktiven Höcker auf, so kann die gewünschte Wirkung durch jeden einzelnen Höcker oder gemeinsam durch mehrere Höcker erreicht werden.

Nachstehend wird die Erfindung anhand eines Ausbildungbeispieles unter Bezugnahme auf die Zeichnung näher erläutert. Es zeigen:
- Fig. 1: künstliche Backenzähne und einen benachbarten Teil eines Kieferkammes in einem frontalen (transversalen) Schnittbild, und

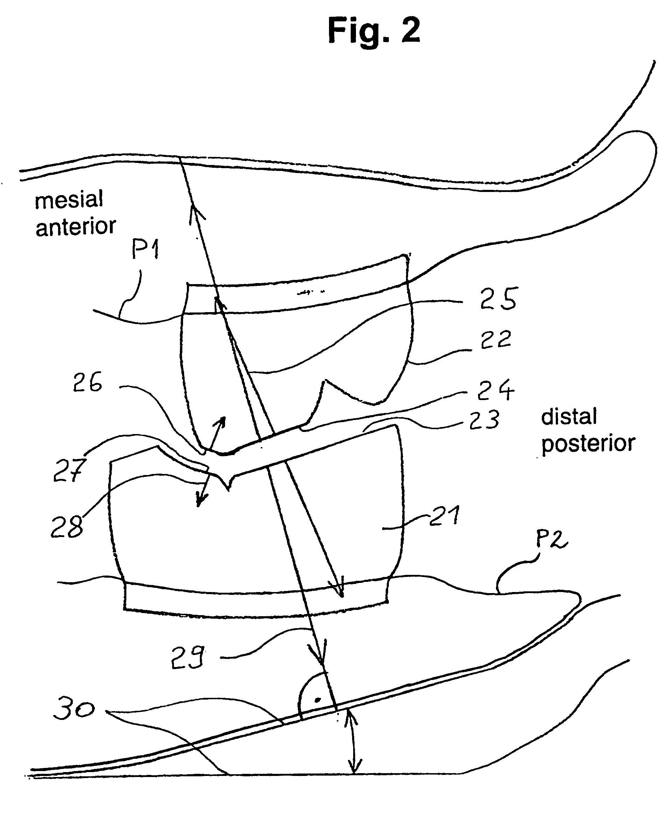

- Fig. 2: die künstliche Backenzähne und den benachbarten Teil des Kieferkammes der Fig. 1 in einem seitlichen (sagittalen) Schnittbild.

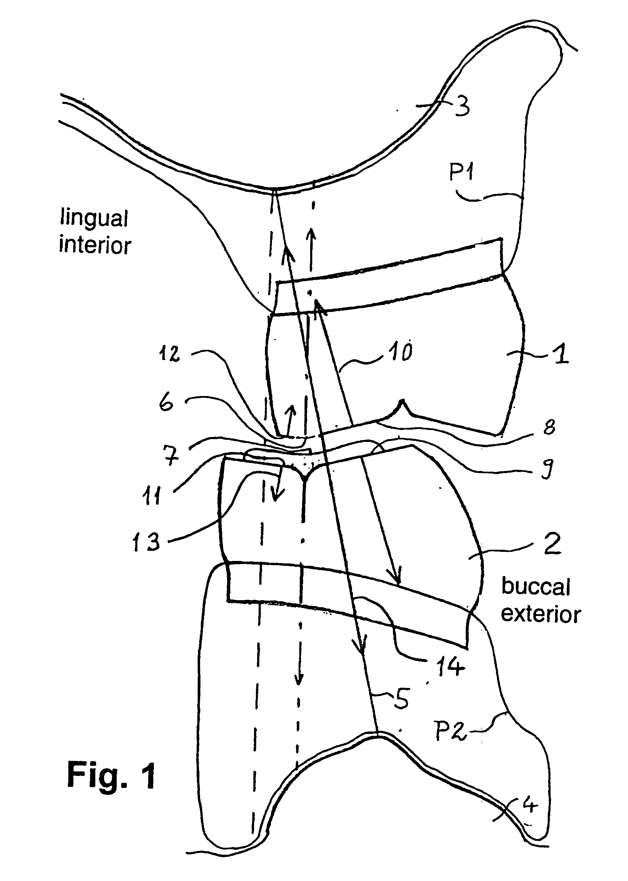

In dem nachstehend zur Veranschaulichung, jedoch ohne jegliche Einschränkung darauf beschriebenen Ausbildungsbeispiel der Erfindung wird in Fig. 1 in frontaler Schnittansicht ein oberer künstlicher Backenzahn 1 und ein unterer künstlicher Backenzahn 2 gezeigt. Darüber bzw. darunter ist der jeweilige, in klassischer Situation ersichtliche Kieferkamm mit 3 bzw. 4 bezeichnet. Selbstverständlich sind die Backenzähne 1 und 2 in je einem Prothesenkörper P1 und P2 eingebettet, der sich jeweils zwischen dem Backenzahn 1 bzw. 2 und dem entsprechenden Kieferkamm 3 bzw. 4 befindet und den Backenzahn am entsprechenden Kieferkamm abstützt.

Eine Verbindungslinie 5 verbindet die beiden Kieferkämme 3 und 4 entlang der sogenannten "interalveolären Linie" und zeigt dabei die gewünschte Richtung des tatsächlichen Kraftvektors.

Ein Höcker 6 des oberen Backenzahnes 1 und eine Kaugrube 7 des unteren Backenzahnes 2 weisen einander gegenüberliegende, grossflächige, im wesentlichen ebene Facetten 8 bzw. 9 auf, welche dank ihrer Neigung zur Vertikalen (mit Bezug auf den aufrecht stehenden Prothesenträger) und ihrer Ausdehnung einen Haupt-Kraftvektor 10 der gewünschten Orientierung annähernd parallel zur Verbindungslinie 5 erzeugen.

Um ein ungehindertes Abgleiten auf dem unteren Backenzahn 2 zu verhindern, ist an der Kaugrube 7 des unteren Backenzahnes 2 eine Hilfsfacette 11 vorgesehen, die eine Stütze nach innen (lingual) bietet. Der Kontakt einer Hilfsfacette 12 des Höckers 6 des oberen Backenzahnes 1 zu dieser Hilfsfacette 11 ist annähernd punktförmig d.h. von kleiner Berührungsfläche, um eine von einem Hilfs-Kraftvektor 13 dargestellte möglichst schwache Kraft zu erzeugen. Je kleiner dieser Kontakt ist, umso weniger wird davon die Wirkung des grossflächigen Kontaktes der äusseren Facetten beinflusst.

Der für die Prothesenstabilität relevante resultierende Kraftvektor 14 ergibt sich dann aus der Summe der beiden Kraftvektoren 10 und 13 und sollte idealerweise parallel zur interalveolären Verbindungslinie 5 orientiert sein.

Die Neigung der beiden Facetten 8, 9 ist so gestaltet, dass natürliche Bewegungen zur Seite nicht behindert werden aber zugleich gestützt bleiben.

Auf diese Weise wird eine korrekte transversale Zentrierung der unteren zu den oberen Backenzähnen gesichert.

In seitlicher Schnittansicht weist der untere Backenzahn 21 eine deutlich nach hinten-oben ansteigende Facette 23 auf. Grössflächig steht der hintere Anteil des antagonistischen Höckers des oberen Backenzahnes 22 mit dessen Facette 24 dagegen. Es entsteht ein Haupt-Kraftvektor 25, der im wesentlichen rechtwinklig zu den Kontaktflächen 23 und 24 nach hinten-unten (und oben-vorne) verläuft. Um auch hier ein unkontrolliertes, gegenseitiges Verschieben der beiden Backenzähne zueinander zu verhindern, ist ein kleiner Hilfskontakt von Hilfsfacetten 26, 27 des oberen bzw. unteren Backenzahnes 22 bzw. 21 nötig, der in Gegenrichtung der grossen Kontaktfläche steht. Je kleiner dieser Hilfskontakt bzw. diese Hilfsfacetten 26, 27 und der damit entstehende Hilfs-Kraftvektor 28 sind, umso weniger wird die Wirkung des grossflächigen Kontaktes der hinteren Facetten 23 und 24 beinflusst. Für die Prothesenstabilität relevant ist wiederum der resultierende Kraftvektor 29 als Resultante der beiden Kraftvektoren 25 und 28. Trifft der resultierende Kraftvektor 29 mit weniger als 90° auf den tragenden Kieferkamm auf, verursacht er kein Ausgleiten der Prothese 30 nach vorne.

Die zwei grossflächigen Facetten 8 und 24 und die zwei Hilfsfacetten 12 und 26 des Höckers 6 einerseits, die zwei grossflächigen Facetten 9 und 23 und die zwei Hilfsfacetten 11 und 27 andererseits, sind so zueinander orientiert und dimensioniert, dass sie im wesentlichen an einem gemeinsamen Punkt zusammenlaufen und dabei den resultierenden Kraftverktor im wesentlichen in Richtung der interalveolären Verbindungslinie 5 der am Höcker 6 und an der Kaugrube 7 beteiligten Backenzähne 1 und 22 sowie 2 und 21 orientieren.

Auf diese Weise wird eine korrekte sagittale Zentrierung der unteren zu den oberen Backenzähnen gesichert.

Die beiden beschriebenen Korrekturen der Kraftvektoren (transversal und sagittal) können je nach Anforderung der Verhältnisse einzeln oder kombiniert in einzelnen oder in mehreren Backenzähnen angewandt werden. Auch sind sie in gleicher Weise nicht nur für Backenzähne, sondern auch für Prämolaren oder sogar in Frontzähnen anwendbar. Die Kaugrube kann zentral in einem Backenzahn vorhanden sein oder durch zwei Backenzähne gebildet werden. Ein Backenzahn kann auch mehrere Beziehungen zwischen solcherart geformten Höckern und Kaugruben aufweisen, z.B. bei Backenzähnen mit zwei oralen (inneren) Höckern.

Nach dem gleichen Prinzip ist es je nach Anforderungen individueller Fälle auch möglich, eine Korrektur der Kraftvektoren zu erreichen, die in Gegenrichtung der zuvor beschriebenen Korrektur der Kraftvektoren d.h. nach aussen-oben und/oder nach unten-vorn gerichtet ist.

Mit der Erfindung ist es also möglich, bei fabrikatorisch hergestellten Prothesenezähnen die Kraftvektoren von den bisher vertikalen Wirkungsweise (Konstruktion vom Typ 2) oder sogar bei unstatischer Orientierung (Konstruktion vom Typ 1) gezielt und kontrolliert zu verbessern. Gleichzeitig zur verbesserten Prothesenstabilität lässt sich mehr Zungenraum gewinnen.

### Liste der Bezugszeichen

- P1: oberer Prothesenkörper
- P2: unterer Prothesenkörper
- 1: oberer künstlicher Backenzahn
- 2: unterer künstlicher Backenzahn
- 3: oberer Kieferkamm
- 4: unterer Kieferkamm
- 5: Verbindungslinie
- 6: Höcker des oberen Backenzahnes 1
- 7: Kaugrube des unteren Backenzahnes 2
- 8: Facette des Höckers 6 des oberen Backenzahnes 1
- 9: Facette der Kaugrube 7 des unteren Backenzahnes 2
- 10: Haupt-Kraftvektor
- 11: Hilfsfacette der Kaugrube 7 des unteren Backenzahnes 2
- 12: Hilfsfacette des Höckers 6 des oberen Backenzahnes 1
- 13: Hilfs-Kraftvektor
- 14: resultierender Kraftvektor
- 21: unterer Backenzahn
- 22: oberer Backenzahn
- 23: Facette des unteren Backenzahnes 21
- 24: Facette des oberen Backenzahnes 22
- 25: Haupt-Kraftvektor
- 26: Hilfsfacette des oberen Backenzahnes 22
- 27: Hilfsfacette des unteren Backenzahnes 21
- 28: Hilfs-Kraftvektor
- 29: resultierender Kraftvektor

## Patentansprüche

1. Satz künstlicher Backenzähne einer abnehmbaren Zahnprothese eines Paares von Zahnprothesen für einen Prothesenträger, bei dem die Zahnprothesen einander als obere und untere Zahnprothese entsprechen, wobei die Backenzähne über einen Prothesenkörper am Kieferkamm des Prothesenträgers abstützbar sind, ein Backenzahn der einen Zahnprothese mindestens einen Höcker aufweist, der beim Zusammenbeissen mit einer ihm zugeordneten und ihm gegenüber angeordneten Kaugrube der anderen Zahnprothese in Eingriff kommt, diese Kaugrube wahlweise an einem einzelnen Backenzahn ausgeformt ist oder sich aus der Zusammenwirkung mehrerer Backenzähne ergibt, der Höcker und die Kaugrube im wesentlichen ebene Facetten aufweisen, und je eine Facette des Höckers und der Kaugrube paarweise einander entsprechen und aufeinander aufliegen, wenn beim Zusammenbeissen der Höcker mit der Kaugrube in Eingriff ist, **dadurch gekennzeichnet, dass** von den einander entsprechenden Facetten des Höckers (6) und der Kaugrube (7) mindestens ein Paar von Facetten, die innen/lingual bzw. aussen/bukkal (8 bzw. 9) und/oder vorne/mesial bzw. hinten/distal (24 bzw. 23) liegen, aus wesentlich grossflächigeren Facetten besteht als die in der Gegenneigung dazu liegenden Facetten (12, 26 ; 11, 27).

2. Satz künstlicher Backenzähne nach Anspruch 1, **dadurch gekennzeichnet, dass** zumindest ein Paar von einander entsprechenden Facetten des Höckers (6) und der Kaugrube (7) zwei Facetten umfasst, die im Paar von Zahnprothesen senkrecht zu einer gleichen Richtung (10) einander gegenüber liegen, wobei die eine Facette (9) an der aussen/bukkal (exterior/buccal) liegenden Seite einer Kaugrube (7) eines Zahns (2) und die andere Facette (8) an der innen/lingual (interior/lingual) liegenden Seite eines Höckers (6) eines Zahns (1) angeordnet ist, und wobei die beiden einander gegenüber liegenden Facetten wesentlich grossflächiger ausgebildet sind als anders gerichtete Facetten (12, 11).

3. Satz künstlicher Backenzähne nach Anspruch 1, **dadurch gekennzeichnet, dass** zumindest ein Paar von einander entsprechenden Facetten des Höckers (6) und der Kaugrube (7) zwei Facetten umfasst, die im Paar von Zahnprothesen senkrecht zu einer gleichen Richtung (25) einander gegenüber liegen, wobei die eine Facette (23) an der hinten/distal (posterior/distal) liegenden Seite einer Kaugrube (7) eines Zahns (2) und die andere Facette (24) an der vorne/mesial (anterior/mesial) liegenden Seite eines Höckers (6) angeordnet ist, und wobei die beiden einander gegenüber liegenden Facetten wesentlich grossflächiger ausgebildet sind als anders gerichtete Facetten (26, 27).

4. Satz künstlicher Backenzähne nach Anspruch 1, **dadurch gekennzeichnet, dass** zumindest ein Paar von einander entsprechenden Facetten des Höckers (6) und der Kaugrube (7) zwei Facetten umfasst, die im Paar von Zahnprothesen senkrecht zu einer gleichen Richtung (10, 25) einander gegenüber liegen, wobei die eine Facette (9, 23) an der zugleich aussen/bukkal (exterior/buccal) und hinten/distal (posterior/distal) liegenden Seite einer Kaugrube (7) eines Zahns (2) und die andere Facette (8, 24) an der zugleich innen/lingual (interior/lingual) und vorne/mesial (anterior/mesial) liegenden Seite eines Höckers (6) angeordnet ist, und wobei die beiden einander gegenüber liegenden Facetten wesentlich grossflächiger ausgebildet sind als anders gerichtete Facetten (12, 26; 11, 27).

5. Satz künstlicher Backenzähne nach einem der vorangehenden Ansprüche, **dadurch gekennzeichnet, dass** von den genannten grossflächigeren Facetten (8, 24; 9, 23) jeweils zwei einander gegenüber liegende Facetten (8, 9) im wesentlichen von lingual (interior) nach bukkal (exterior) und/oder zwei einander gegenüber liegende Facetten (23, 24) von vorne (mesial) nach hinten (distal) ansteigen, während von den genannten anders gerichteten Facetten (12, 26; 11, 27) jeweils zwei einander gegenüber liegende Facetten (12; 11) im wesentlichen von bukkal (exterior) nach lingual (interior) und/oder zwei einander gegenüber liegende Facetten (26, 27) von hinten (distal) nach vorne (mesial) ansteigen.

## Claims

1. A set of artificial molars of a removable dental prosthesis of a pair of dental prostheses for a denture wearer whose dental prostheses correspond to each other in the capacity of a superior and inferior dental prosthesis, respectively, the molars being adapted to be supported at the jaw ridge of the denture wearer via a prosthesis body, a molar of the one prosthesis having at least one cusp that, upon the wearer's teeth-clenching, engages a fossa associated thereto and located opposite thereto, this fossa either being formed at an individual molar or resulting from a cooperation of several molars, the cusp and the fossa having essentially flat facets, and respective facets of the cusp and the fossa corresponding to each other and coming to rest on each other pairwise when the cusp engages the fossa upon the wearer's teeth-clenching, **characterized in that**, from the facets of the cusp (6) and the fossa (7) that correspond to each other, at least one pair of facets located on the interior/lingual side and exterior/buccal side, respectively, (8 and 9, respectively) and/or on the anterior/mesial side and posterior/distal side, respectively, (24 and 23, respectively) is constituted of facets of substantially larger area than the facets of opposite slope (12, 26; 11,27).

2. A set of artificial molars according to claim 1, **characterized in that** at least one pair of facets of the cusp (6) and the fossa (7) that correspond to each other comprises two facets that are arranged perpendicularly, to one and the same direction (10) and facing each other within the pair of dental prostheses, one of the facets (9) being located at the exterior/buccal (exterior/buccal) side of a fossa (7) of a tooth (2) and the other facet (8) being located at the interior/lingual (interior/lingual) side of a cusp (6) of a tooth (1), and the two facets that face each other having a substantially larger area than the facets that are oriented differently (12, 11).

3. A set of artificial molars according to claim 1, **characterized in that** at least one pair of facets of the cusp (6) and the fossa (7) that correspond to each other comprises two facets that are arranged perpendicularly, to one and the same direction (25) within the pair of dental prostheses, one of the facets (23) being located at the posterior/distal (posterior/distal) side of a fossa (7) of a tooth (2) and the other facet (24) being located at the anterior/mesial (anterior/mesial) side of a cusp (6), and the two facets that face each other having a substantially larger area than the facets that are oriented differently (26, 27).

4. A set of artificial molars according to claim 1, **characterized in that** at least one pair of facets of the cusp (6) and the fossa (7) that correspond to each other comprises two facets that are arranged perpendicularly to one and the same direction (10, 25) within the pair of dental prostheses, one of the facets (9,23) being located at the simultaneously exterior/buccal (exterior/buccal) and posterior/distal (posterior/distal) side of a fossa (7) of a tooth (2) and the other facet (8, 24) being located at the simultaneously interior/lingual (interior/lingual) and anterior/mesial (anterior/mesial) side of a cusp (6), and the two facets that face each other having a substantially larger area than the facets that are oriented differently (12, 26; 11, 27).

5. A set of artificial molars according to any one of the preceding claims, **characterized in that**, of said facets of substantially larger area (8, 24; 9, 23), each two facets that face each other (8, 9) are sloping substantially upwards from the lingual (interior) side towards the buccal (exterior) side and/or two respective facets that face each other (23, 24) are sloping substantially upwards from the anterior (mesial) side towards the posterior (distal) side, whereas, of said facets that are oriented differently (12, 26; 11, 27), each two facets that face each other (12; 11) are sloping substantially upwards from the buccal (exterior) side towards the lingual (interior) side and/or two respective facets that face each other (26, 27) are sloping substantially upwards from the posterior (distal) side towards the anterior (mesial) side.

## Revendications

1. Jeu de molaires artificielles d'une prothèse dentaire amovible d'une paire de prothèses dentaires destinées à un porteur de prothèse chez lequel les prothèses dentaires se correspondent en tant que prothèse dentaire supérieure et inférieure, les molaires étant susceptibles de prendre appui sur la crête de mâchoire du porteur de prothèse par l'intermédiaire d'un corps de prothèse, une molaire de l'une des prothèses présentant au moins une cuspide qui entre en contact, lors du serrage des mâchoires, avec une fosse de mastication de l'autre prothèse qui est affectée à cette cuspide et disposée en regard de celle-ci, cette fosse de mastication résultant soit de la conformation d'une molaire individuelle soit de la coopération de plusieurs molaires, la cuspide et la fosse de mastication présentant des facettes essentiellement planes, et chaque fois une facette respective de la cuspide et de la fosse de mastication correspondant et se joignant l'une à l'autre par paires lorsque la cuspide est au contact de la fosse de mastication lors d'un serrage des mâchoires, **caractérisé en ce que**, parmi les facettes de la cuspide (6) et de la fosse de mastication (7) qui se correspondent, au moins une paire de facettes respectivement situées du côté intérieur/lingual et extérieur/buccal (resp. 8 et 9) et/ou respectivement situées du côté antérieur/mésial et postérieur/distal (resp. 24 et 23) est constituée de facettes d'une surface considérablement plus grande que les facettes disposées selon la pente opposée (12, 26; 11,27).

2. Jeu de molaires artificielles selon la revendication 1, **caractérisé en ce qu'**au moins une paire de facettes correspondant l'une à l'autre de la cuspide (6) et de la fosse de mastication (7) comporte deux facettes qui sont disposées face à face perpendiculairement à une même direction (10) au sein de la paire de prothèses dentaires, l'une des facettes (9) étant disposée du côté extérieur/buccal (exterior/buccal) d'une fosse de mastication (7) d'une dent (2) et l'autre facette (8) étant disposée du côté intérieur/lingual (interior/lingual) d'une cuspide (6) d'une dent (1), et les deux facettes disposées face à face présentant une surface considérablement plus grande que les facettes orientées autrement (12, 11).

3. Jeu de molaires artificielles selon la revendication 1, **caractérisé en ce qu'**au moins une paire de facettes correspondant l'une à l'autre de la cuspide (6) et de la fosse de mastication (7) comporte deux facettes qui sont disposées face à face perpendiculairement à une même direction (25) au sein de la paire de prothèses dentaires, l'une des facettes (23) étant disposée du côté postérieur/distal (posterior/distal) d'une fosse de mastication (7) d'une dent (2) et l'autre facette (24) étant disposée du côté antérieur/mésial (anterior/mesial) d'une cuspide (6), et les deux facettes disposées face à face présentant une surface considérablement plus grande que les facettes orientées autrement (26, 27).

4. Jeu de molaires artificielles selon la revendication 1, **caractérisé en ce qu'**au moins une paire de facettes correspondant l'une à l'autre de la cuspide (6) et de la fosse de mastication (7) comporte deux facettes qui sont disposées face à face perpendiculairement à une même direction (10, 25) au sein de la paire de prothèses dentaires, l'une des facettes (9, 23) étant disposée du côté simultanément extérieur/buccal (exterior/buccal) et postérieur/distal (posterior/distal) d'une fosse de mastication (7) d'une dent (2) et l'autre facette (8, 24) étant disposée du côté simultanément intérieur/lingual (interior/lingual) et antérieur/mésial (anterior/mesial) d'une cuspide (6), et les deux facettes disposées face à face présentant une surface considérablement plus grande que les facettes orientées autrement (12, 26; 11, 27).

5. Jeu de molaires artificielles selon l'une des revendications précédentes, **caractérisé en ce que**, parmi ledites facettes de surface plus grande (8, 24; 9, 23), deux facettes qui sont chaque disposées face à face (8, 9) s'élèvent essentiellement depuis le côté lingual (interior) vers le côté buccal (exterior) et/ou deux facettes qui sont chaque disposées face à face (23, 24) s'élèvent essentiellement depuis le côté antérieur (mesial) vers le côté postérieur (distal), tandis que, parmi ledites facettes autrement (12, 26; 11, 27), deux facettes qui sont chaque disposées face à face (12; 11) s'élèvent essentiellement depuis le côté buccal (exterior) vers le côté lingual (interior) et/ou deux facettes qui sont chaque disposées face à face (26, 27) s'élèvent essentiellement depuis le côté postérieur (distal) vers le côté antérieur (mesial).
